# FASCICULE DE BREVET EUROPEEN

(11) **EP 1 165 282 B1**
(45) Date de publication et mention de la délivrance du brevet: **14.07.2004**
(21) Numéro de dépôt: 00915239.8
(22) Date de dépôt: 29.03.2000
(51) Int. Cl.: B23K 37/04

(54) **PROCEDE DE MAINTIEN EN POSITION D'UNE PIECE DANS UN POSTE D'ASSEMBLAGE**
VERFAHREN ZUR BEIBEHALTUNG DER POSITION EINES WERKSTÜCKES IN EINEM MONTAGEPLATZ
METHOD FOR HOLDING A PART IN POSITION IN AN ASSEMBLY STATION

(30) Priorité: 06.04.1999 FR 9904245
(43) Date de publication de la demande: 02.01.2002
(73) Titulaire: ABB MC, 95310 Saint Ouen l'Aumône (FR)
(72) Inventeur: BIDAUD, Daniel, F-95150 Taverny (FR)
(74) Mandataire: Robert, Jean-Pierre
(86) Numéro de dépôt international: PCT/FR2000/000782
(87) Numéro de publication internationale: WO 2000/059675

(56) Documents cités:
- GB-A- 2 283 447
- US-A- 3 182 988
- US-A- 4 175 734

## Description

Dans les procédés d'assemblage de pièces, notamment de pièces de carrosserie automobile, il est d'usage d'amener les différentes pièces à assembler dans un poste d'assemblage où elles sont d'une part, précisément mises en place les unes par rapport aux autres et d'autre part, maintenues fermement dans leur position définitive pour éviter que les efforts qu'elles subissent du fait des outillages d'assemblage (pinces de soudure notamment) ne viennent perturber, fausser ou modifier la position qui leur est assignée donc la géométrie générale de l'assemblage une fois réalisé (voir, par exemple, GB-A-2 283 447).

L'approvisionnement d'un poste d'assemblage en pièces à lier les unes aux autres est assuré par un outil de manutention (un robot) qui "confie" la pièce qu'il transporte à un outillage spécifique du poste d'assemblage, lequel assure cette mise en place précise et son bridage ferme dans cette position. Cette disposition classique présente le grand inconvénient de devoir mettre en oeuvre les outils dans le poste d'assemblage dédiés à chaque pièce reçue. En conséquence, pour passer d'une fabrication à une autre, alors que l'on peut conserver un robot manipulateur unique, il est nécessaire de changer les outils de mise en position et de bridage du poste d'assemblage. Cette obligation constitue une limite importante à la flexibilité du poste d'assemblage, c'est-à-dire à sa capacité d'accueillir différents types de pièces. Il convient en effet de disposer d'un jeu d'outils par pièces et de pourvoir le poste de moyens de changement d'outils afin que celui-ci se fasse le plus rapidement possible. Le poste d'assemblage devient alors très encombré par des moyens de manutention de ces jeux d'outils (se présentant souvent sous forme de palettes pré-équipées). Il faut en outre que ces moyens de manutention soient de fabrication soignée pour que la mise en place des jeux d'outils soit aussi précise que possible dans le poste et n'entraîne pas de dispersion inacceptable dans la précision de la mise en place des pièces à assembler. En outre, ces changements d'outils demandent du temps et celui-ci est un facteur d'allongement des temps de cycle de réalisation des assemblages, ce qui nécessairement, se traduit par une augmentation des coûts de production.

Aujourd'hui la précision des robots de manutention dans la commande de leur trajectoire et dans les coordonnées des positions initiales et finales de cette trajectoire devient tout-à-fait compatible avec la précision requise pour le positionnement des pièces dans le repère de référence du poste d'assemblage. Il résulte de cela que l'on peut par changement de programmation d'un robot de manutention, mettre en place de manière précise différentes pièces dans un repère d'assemblage, repère dans lequel, par le jeu également d'une programmation adaptée et variable, il est possible d'assigner une position précise aux outils d'assemblage tels que les pinces de soudure.

Il est donc possible de supprimer les outils de positionnement spécifiques antérieurement nécessaires aux postes d'assemblage. Cependant la structure d'un robot ne permet pas résister aux efforts subis par les pièces du fait de l'action des outils d'assemblage pour maintenir fixe la position de chaque pièce lors de l'opération d'assemblage (soudure par exemple). Il y a alors un risque important d'obtenir un assemblage de géométrie incorrecte.

Par la présente invention on entend apporter une solution à l'assemblage de pièces (au moins déux) notamment de carrosserie automobile qui, en profitant de la précision des robots, permet de simplifier considérablement l'outillage des postes d'assemblage et par là de rendre ces derniers aptes à accueillir des pièces de géométrie différente avec pour conséquence une grande flexibilité d'emploi de ces postes.

A cet effet l'invention a donc pour objet un procédé de maintien en position d'une pièce dans un poste d'assemblage selon lequel, au moyen d'un robot de manutention, on place la pièce dans une position déterminée dans le repère du poste d'assemblage, on referme au moins une pince sur une partie solidaire de la pièce, la pince étant montée à coulissement libre dans un guide du poste d'assemblage orienté parallèlement à la direction de son serrage et on bloque le coulissement de la pince serrée sur la pièce.

En d'autres termes, selon le procédé de l'invention, une fois la pièce placée au moyen du robot de positionnement, on la bride sur un support qui fait partie du poste d'assemblage en évitant que les efforts de bridage constituent des efforts parasites sur la position de la pièce, efforts que ne pourrait contrer valablement le robot qui la maintient dans sa position. On comprend en effet, par exemple, qu'une pince qui est montée coulissante sur le support susdit le long d'un guide parallèle à la direction de serrage de ses mâchoires, ne peut pas exercer d'effort selon la direction du coulissement. En conséquence, le bridage, en théorie, ne crée aucun déplacement de la pièce. Une fois la pièce prise entre les mâchoires, il suffit de bloquer la pince dans son guide pour que la pièce soit bridée sur le support sans que sa position définie par le robot ait été modifiée.

Il existe plusieurs possibilités pour bloquer la pince, c'est-à-dire lui supprimer son degré de liberté le long de son guide. Dans une première réalisation, le blocage du coulissement est assuré par le serrage d'au moins une seconde pince coulissante dont la direction de coulissement n'est pas parallèle à celle de la pince dont il faut supprimer le degré de liberté le long de son guide.

Dans une deuxième réalisation, le blocage du coulissement est assuré par un frein qui intervient entre le guide et le coulisseau porte-pince.

Selon la géométrie de l'assemblage à réaliser, du nombre de pièces à mettre en place les unes par rapport aux autres dans le poste d'assemblage, la taille de ces pièces, la nécessaire emprise du robot de manutention sur celles-ci, et les libertés d'accès qu'il convient de ménager pour les outils d'assemblage, les pinces de bridage de la pièce sur le support faisant partie du poste d'assemblage agissent soit directement sur la pièce, soit sur une partie du robot qui appartient à son extrémité de préhension de la pièce.

D'autres caractéristiques et avantages de l'invention ressortiront de la description donnée ci-après de manière non limitative de deux exemples de réalisation de l'invention.

Il sera fait référence aux dessins annexés parmi lesquels :
- la figure 1 est la représentation d'une réalisation schématique d'un bridage d'un pièce dans un poste d'assemblage selon trois axes orthogonaux du repère du poste d'assemblage,
- la figure 2 est la représentation d'une variante de réalisation d'un dispositif mettant en oeuvre le procédé de l'invention.

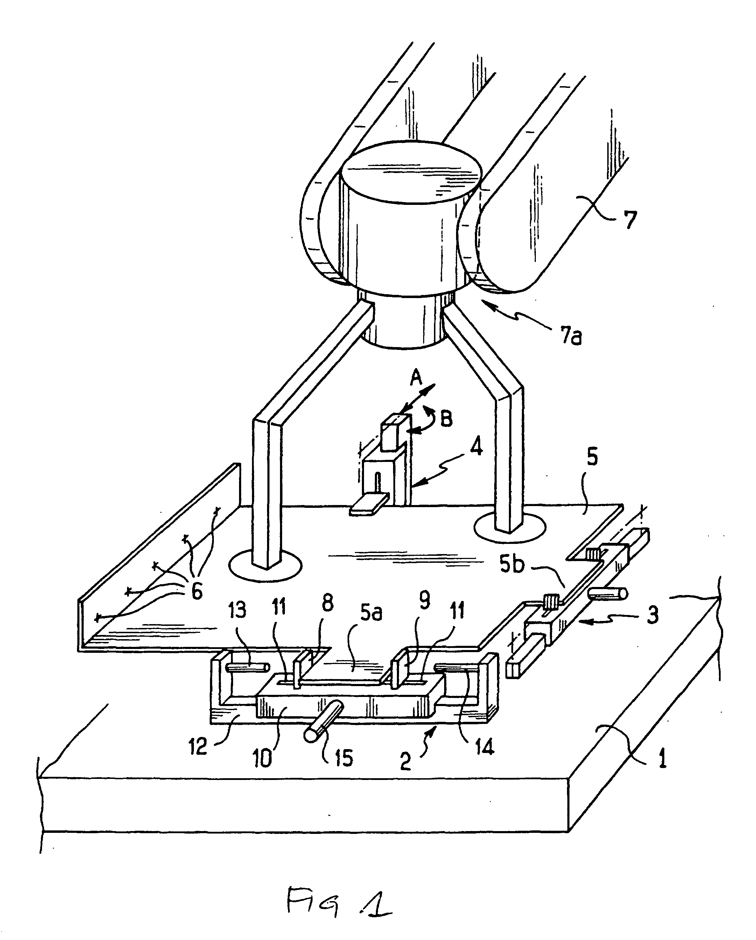

A la figure 1 une table 1 représente la structure de base du poste d'assemblage. Sur cette table sont disposés trois moyens de bridage 2, 3 et 4 d'une tôle 5 destinée à être assemblée par exemple par points de soudure 6 à une autre pièce placée dans le poste d'assemblage et non représentée. La tôle 5 est amenée dans le repère du poste d'assemblage et placée de manière précise dans celui-ci par un robot 7 dont on a représenté schématiquement que le préhenseur 7a auquel la pièce 5 est attelée par un moyen connu (clipage, ventouse, ...).

Pour les besoins de l'explication on aura représenté la pièce 5 avec deux languettes latérales 5a et 5b qui sont utilisées pour brider la pièce dans un plan parallèle au plan du support 1 du poste d'assemblage.

Egalement pour les besoins de l'explication on a représenté chaque moyen de bridage comme ayant la forme d'une pince possédant, par exemple pour le moyen 2, deux mâchoires 8 et 9 qui sont montées à coulissement dans un corps 10 comportant des glissières 11 et qui peuvent être écartées ou rapprochées l'une de l'autre au moyen par exemple d'un vérin qui est non représenté mais logé à l'intérieur du corps 10.

Le corps 10 forme quant à lui un coulisseau monté à glissement libre sur un guide 12 qui est fixé fermement à la table 1 du poste d'assemblage. Le guide 12 possède à ses extrémités des butées fixes 13 et 14 pour les mâchoires 8 et 9 afin d'en limiter l'écartement maximal.

Les organes 3 et 4 représentés schématiquement à la figure 1 sont de même structure que l'organe 2. On notera cependant que l'organe 3 est orthogonal à l'organe 2 et que l'organe 4 est orthogonal et à l'organe 2 et à l'organe 3. Ainsi les coulisseaux 10 de chacun des organes 2, 3 et 4 qui sont parallèles à la direction de serrage-desserrage des mâchoires 8 et 9 qu'ils comportent, ne sont pas parallèles entre eux.

Lorsque le poste d'assemblage est en attente de la pièce 5, les mâchoires de chaque paire sont écartées au maximum l'une de l'autre, c'est-à-dire qu'elles sont en appui sur les butées 13 et 14 de chaque organe de bridage. En outre, l'organe 4 qui assure le bridage eh altitude de la pièce 5 est escamoté soit par basculement comme l'indique la flèche A soit par rotation autour d'un axe perpendiculaire au support 1 comme l'indique la flèche B. L'ouverture maximale de chaque pince définit la dimension maximale de la partie de pièce à serrer. On comrpend qu'ainsi, différentes pièces peuvent être accueillies par ces moyens de bridage.

Le robot 7 place la pièce dans le repère du poste d'assemblage alors que les organes de bridage sont en attente. Une fois la position finale atteinte, on commande par un automate non représenté agissant sur les vérins de déplacement des mâchoires, le rapprochement de ces mâchoires l'une vers l'autre. Auparavant, en ce qui concerne l'organe 4 de bridage de la pièce en altitude, on aura commandé sa mise en service par rotation ou basculement selon les flèches A ou B.

On comprend que, au cours du serrage des organes de bridage, l'une des mâchoires prend appui sur la pièce 5 de sorte que la poursuite du serrage entraîne le rapprochement de l'autre mâchoire en même temps que le coulissement libre du support 10 de chaque organe. Il n'y a donc, appliqué sur la pièce 5, qu'un effort minime qui est égal à celui nécessaire à vaincre les frottements entre le coulisseau 10 et le guide 11, effort que l'on peut réduire au maximum si on met en oeuvre entre le coulisseau et le guide des organes de guidage à haute performance tels que des billes ou des surfaces à très faible coefficient de frottement, effort qui, compte tenu de sa faible importance, peut être encaissé par le robot sans déformation donc sans modification de la position de la pièce 5.

Lorsque le serrage est terminé, c'est-à-dire lorsque les mâchoires sont resserrées sur la pièce 5 avec un effort déterminé, cette pièce est parfaitement maintenue dans le repère du poste d'assemblage et les efforts de bridage qui la maintiennent sont suffisants pour pouvoir résister, sans qu'il y ait création de déplacement, aux efforts que la pièce 5 subira du fait des outils de soudure lors de la réalisation des points 6.

On comprend en effet que le déplacement du coulisseau 10 le long du guide 12 est contré fermement par le bridage effectué par l'organe 3 et l'organe 4. Il en est de même pour le déplacement des coulisseaux de ces organes 3 et 4. Ceci est obtenu parce que le degré de liberté linéaire des coulisseaux de chaque organe de bridage s'étend dans des directions non parallèles à celle des autres.

Dans une variante de réalisation applicable par exemple au cas où il ne serait pas possible de prévoir des directions de coulissement non parallèles entre les moyens de bridage ou applicable à titre de sécurité supplémentaire pour supprimer le degré de liberté de chaque coulisseau, on peut mettre en place un dispositif d'immobilisation de chaque coulisseau par rapport à son guide représenté schématiquement pour ce qui concerne le moyen 2 par un vérin 15 actionnant un patin de freinage ou de verrouillage du coulisseau 10 sur le guide 12.

Dans d'autres cas enfin, il peut être intéressant de prévoir un degré de liberté supplémentaire aux dispositifs de bridage selon l'invention qui consisterait par exemple à ce que le guide 12 soit lui-même solidaire de l'infrastructure (support 1) du poste d'assemblage par l'intermédiaire d'un axe de rotation qui serait orthogonal à la direction de coulissement des mâchoires. De la même manière que précédemment décrit, ce degré de liberté en rotation serait maîtrisé soit par le serrage d'autres moyens de bridage, soit ou en plus par la mise en oeuvre de dispositifs de neutralisation de ce degré de liberté en rotation (freins, verrouillage...).

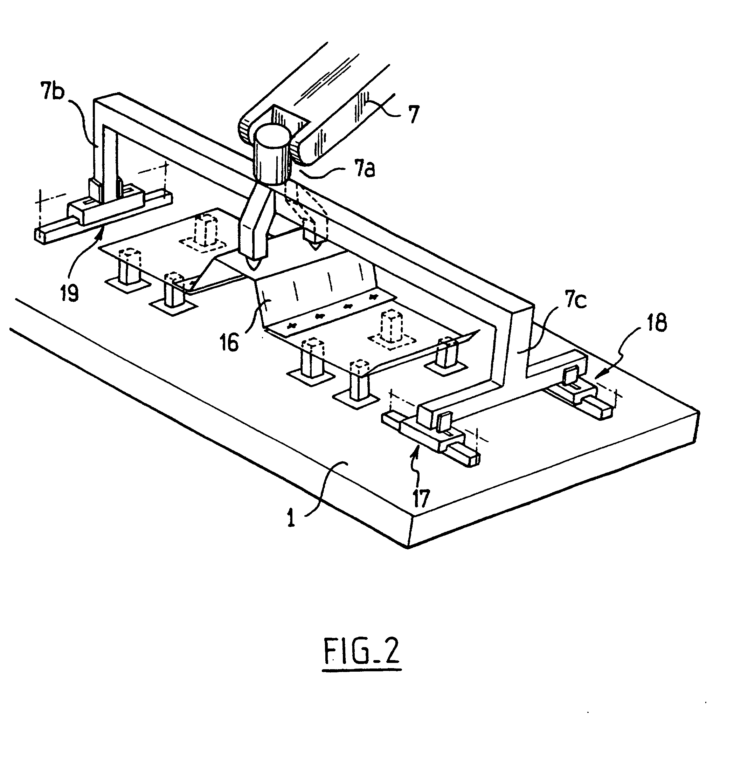

Alors qu'à la figure 1 le bridage de la pièce en position dans le poste d'assemblage est assuré par des moyens qui agissent directement sur elle, à la figure 2 on a représenté une variante de réalisation dans laquelle la partie 7a de préhension du robot de la pièce 16 mise en place dans le poste d'assemblage comporte des extensions 7b, 7c sur lesquelles vont s'exercer les moyens de bridage 17, 18, 19. Le principe de bridage est le même que celui décrit en regard de la figure 1, et les moyens 17, 18, 19 comportent les mêmes caractéristiques. Cette disposition est intéressante dans la mesure où il convient par exemple de laisser un accès suffisamment important, dans le poste d'assemblage, au voisinage de la pièce, pour les outils d'assemblage que peuvent être les pinces à souder.

## Revendications

1. Procédé de maintien en position d'une pièce (5, 16) dans un poste d'assemblage (1), **caractérisé en ce que**, au moyen d'un robot (7) de manutention, on place la pièce (5, 16) dans une position déterminée du repère du poste d'assemblage (1), **en ce qu'**on referme au moins une pince (2, 3, 4, 17, 18, 19) sur une partie (5a, 5b, 7b, 7c), solidaire de la pièce, la pince étant montée à coulissement libre dans un guide (12) du poste d'assemblage (1) orienté parallèlement à la direction de son serrage et **en ce qu'**on bloque le coulissement de la pince serrée sur la pièce.

2. Procédé selon la revendication 1, **caractérisé en ce que** le blocage du coulissement est assuré par le serrage d'au moins une seconde pince coulissante dont la direction de coulissement n'est pas parallèle à celle de la pince à immobiliser.

3. Procédé selon la revendication 1, **caractérisé en ce que** le blocage du coulissement est assuré par un frein (15).

4. Procédé selon la revendication 1, **caractérisé en ce que** la partie solidaire de la pièce (16) est formée par un élément (7b, 7c) du préhenseur (7a) du robot (7) lui-même.

## Claims

1. A method of holding a part (5, 16) in position in an assembly station (1), the method being **characterized in that** the part (5, 16) is put into a determined position in the frame of reference of the assembly station (1) by means of a handling robot (7), **in that** at least one clamp (2, 3, 4, 17, 18, 19) is closed onto a portion (5a, 5b, 7b, 7c) secured to the part, the clamp being mounted to slide freely in a guide (12) of the assembly station (1) extending parallel to its own clamping direction, and **in that** the clamp is blocked against sliding when it is clamped onto the part.

2. A method according to claim 1, **characterized in that** sliding is blocked by clamping at least a second sliding clamp whose sliding direction is not parallel to that of the clamp that is to be prevented from moving.

3. A method according to claim 1, **characterized in that** sliding is blocked by a brake (15).

4. A method according to claim 1, **characterized in that** the portion secured to the part (16) is constituted by an element (7b, 7c) of the grip (7a) of the robot (7) itself.

## Patentansprüche

1. Verfahren zur Positionshaltung eines Werkstückes (5, 16) in einer Montagestation (1), **dadurch gekennzeichnet, dass** man das Werkstück (5, 16) mittels eines Handhabungsroboters (7) in einer vorgegebenen Position des Bezugssystems der Montagestation (1) plaziert, dass man mit mindestens einer Zange (2, 3, 4, 17, 18, 19) einen Abschnitt (5a, 5b, 7b, 7c) spannt, der fest mit dem Werkstück verbunden ist, wobei die Zange frei verschiebbar in einer Führung (12) der Montagestation (1) gelagert ist, die parallel zur Spannrichtung der Zange ausgerichtet ist, und dass man die Verschiebung der an dem Werkstück gespannten Zange blockiert.

2. Verfahren nach Anspruch 1, **dadurch gekennzeichnet, dass** die Blockierung der Verschiebung durch das Spannen mindestens einer zweiten Gleitzange sichergestellt wird, deren Verschiebungsrichtung zu der der zu blockierenden Zange nicht parallel ist.

3. Verfahren nach Anspruch 1, **dadurch gekennzeichnet, dass** die Blockierung der Verschiebung durch eine Bremse (15) sichergestellt wird.

4. Verfahren nach Anspruch 1, **dadurch gekennzeichnet, dass** der Abschnitt, der fest mit dem Werkstück (16) verbunden ist, aus einem Element (7b, 7c) des Greifers (7a) des Roboters (7) selbst gebildet ist
